(19) Europäisches Patentamt
European Patent Office
Office européen des brevets

(11) Veröffentlichungsnummer: **0 205 398**
**B1**

(12) **EUROPÄISCHE PATENTSCHRIFT**

(45) Veröffentlichungstag der Patentschrift: **08.11.89**

(21) Anmeldenummer: **86810212.0**

(22) Anmeldetag: **13.05.86**

(51) Int. Cl.⁴: **C 10 M 137/10,** C 07 F 9/65 // (C10N10/00, 30:10, 40:08),(C10M137/10, 133:44)

(54) **Zusätze für funktionelle Flüssigkeiten.**

(30) Priorität: **16.05.85 GB 8512444**
**19.06.85 GB 8515477**

(43) Veröffentlichungstag der Anmeldung: **17.12.86 Patentblatt 86/51**

(45) Bekanntmachung des Hinweises auf die Patenterteilung: **08.11.89 Patentblatt 89/45**

(84) Benannte Vertragsstaaten: **BE DE FR GB IT**

(56) Entgegenhaltungen: **US-A- 4 456 539**

(73) Patentinhaber: **CIBA-GEIGY AG, Klybeckstrasse 141, CH-4002 Basel (CH)**

(72) Erfinder: **O'Neil, Robert Montgomery, Dr., 64 Chaddock Lane, Boothstown Manchester M28 4DP (GB)**
Erfinder: **Kristen, Ulrich, Dr., Störklingasse 40, CH-4125 Riehen (CH)**
Erfinder: **Häring, Ulrich, Dr., Chrischonaweg 36, CH-4125 Riehen (CH)**

EP 0 205 398 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Vorliegende Erfindung betrifft neue Reaktionsprodukte und deren Verwendung zur Verbesserung der Eigenschaften von funktionellen Flüssigkeiten.

In der laufenden Patentanmeldung GB-A-2 156 813 haben wir neue N-substituierte, als Metalldesaktivatoren in funktionellen Flüssigkeiten verwendbare Verbindungen der Formel

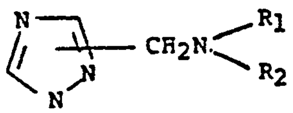

worin $R_1$ und $R_2$ gleich oder verschieden sind und je für $C_1$-$C_{20}$-Alkyl, $C_3$-$C_{20}$-Alkenyl, $C_5$-$C_{12}$-Cycloalkyl, $C_7$-$C_{13}$-Aralkyl oder $C_6$-$C_{10}$-Aryl stehen oder zusammen mit dem Stickstoffatom, an das sie gebunden sind, einen 5-, 6- oder 7gliedrigen heterocyclischen Rest bilden können oder je einen Rest der Formel

$R_3X[(Alkylen)O]_n(Alkylen)$-

darstellen, wobei X für O, S oder $N(R_3)$, $R_3$ für Wasserstoff oder $C_1$-$C_{20}$-Alkyl, «Alkylen» für einen $C_1$-$C_{12}$-Alkylenrest und n für 0 oder eine ganze Zahl von 1 bis 6 stehen, oder $R_1$ seine obige Bedeutung hat und $R_2$ einen Rest der Formel

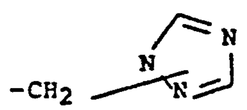

oder einen Rest der Formel

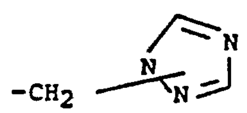

und $R_1$ einen Rest der Formel

$R_4$
|   $R_4$
$-[Alkylen]_n$-N-A-[N<   $]_m$
$R_4$

darstellen, wobei m null oder 1 ist und bei m = null A einen Rest der Formel

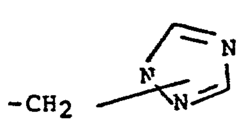

und bei m = 1 Alkylen oder $C_6$-$C_{10}$-Arylen bedeutet sowie Alkylen und n die oben angegebenen Bedeutungen haben und $R_4$ einen Rest der Formel

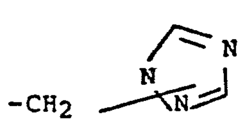

darstellt, beschrieben.

Ferner sind aus US-A-4 456 539 Reaktionsprodukte aus

a) Alkylbenztriazolen der Formel

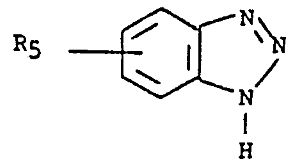

worin $R_5$ für $C_1$-$C_{12}$-Alkyl steht, und

b) Organodithiophosphaten der Formel

S
‖
$[(R_6O)_2P\text{-}S]_x\text{-}M$

worin $R_6$ gleiche oder verschiedene Kohlenwasserstoffgruppen, vorzugsweise eine $C_1$-$C_{25}$-Alkyl- oder -Alkarylgruppe und M ein Kation einschliesslich eines Ammoniumions oder eines Metalls, vorzugsweise aus Gruppe IA, IIA, IIB, VIB und VII, darstellen, bekannt. Die Reaktionsprodukte sollen als Antioxydantien in Schmierstoffzusammensetzungen nützlich sein.

Wir haben nun gewisse neue Reaktionsprodukte von Triazolen und Organodithiophosphaten gefunden, die ausgezeichnete metallpassivierende und antioxidirende Eigenschaften in funktionellen Flüssigkeiten sowie eine gegenüber nicht einer Reaktion unterzogenen Triazolen erhöhte Löslichkeit in funktionellen Flüssigkeiten aufweisen.

Gegenstand vorliegender Erfindung ist demnach ein neues Reaktionsprodukt, hergestellt durch Umsetzung bei einer Temperatur im Bereich von 30 bis 150°C.

A) eines Triazols der Formel IA oder IB

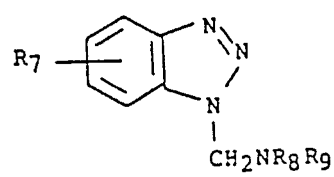

IA

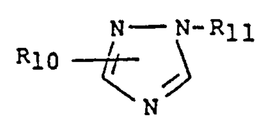

IB

worin $R_7$ für Wasserstoff oder einen $C_1$-$C_{20}$-Alkylrest steht, $R_8$ und $R_9$ gleich oder verschieden sind und je $C_1$-$C_{20}$-Alkyl, $C_3$-$C_{20}$-Alkenyl, $C_5$-$C_{12}$-Cycloalkyl, $C_7$-$C_{13}$-Aralkyl oder $C_6$-$C_{10}$-Aryl bedeuten oder zusammen mit dem Stickstoffatom, an das sie gebunden sind, einen 5-, 6- oder 7gliedrigen heterocyclischen Rest bilden oder je einen Rest der Formel

$R_{12}X[(Alkylen)O]_n(Alkylen)$-     II

darstellen, wobei X für O, S oder $N(R_{12})$, $R_{12}$ für Wasserstoff oder $C_1$-$C_{20}$-Alkyl, «Alkylen» für einen $C_1$-$C_{12}$-Alkylenrest und n für 0 oder eine ganze Zahl von 1 bis 6 stehen, sowie $R_{10}$ Wasserstoff, $C_1$-$C_{20}$-Alkyl, $C_6$-$C_{10}$-Aryl oder $C_7$-$C_{18}$-Alkylphenyl, vorzugsweise $C_7$-$C_{13}$-Alkylphenyl, und $R_{11}$ Wasser-

stoff, $C_1$-$C_{20}$-Alkyl oder einen Rest $-CH_2NR_8R_9$, worin $R_8$ und $R_9$ die oben angegebenen Bedeutungen haben, darstellen, mit

B) einem Organodithiophosphat der Formel

$$[(R_{13}O)_2\overset{\overset{\displaystyle S}{\|}}{P}\text{-}S]_y\text{-}M \qquad III$$

worin $R_{13}$ eine $C_1$-$C_{20}$-Alkyl-, $C_7$-$C_{18}$-Alkylphenyl- oder $C_7$-$C_{13}$-Aralkylgruppe, M ein Metallion aus Gruppe IA, IB, IIA, IIB, VB, VIB, VIIB oder VIII des Periodensystems der Elemente und y die Wertigkeit von M bedeuten.

Die Gruppen $R_7$, $R_8$, $R_9$, $R_{10}$, $R_{11}$, $R_{12}$ und $R_{13}$ als $C_1$-$C_{20}$-Alkyl können unabhängig voneinander geradkettig oder verzweigt sein, beispielsweise Methyl, Äthyl, n-Propyl, Isopropyl, n-Butyl, sek.-Butyl, n-Pentyl, n-Hexyl, n-Heptyl, n-Octyl, 2-Äthylhexyl, n-Nonyl, n-Decyl, n-Dodecyl, n-Tetradecyl, n-Hexadecyl, n-Octadecyl oder n-Eikosyl.

Eine $C_3$-$C_{20}$-Alkenylgruppe als $R_8$ und/oder $R_9$ kann geradkettig oder verzweigt sein, beispielsweise Prop-2-enyl, But-2-enyl, 2-Methyl-prop-2-enyl, Pent-2-enyl, Hexa-2,4-dienyl, Dec-10-enyl oder Eikos-2-enyl.

Als $C_5$-$C_{12}$-Cycloalkylgruppen $R_8$ und/oder $R_9$ kann Cyclopentyl, Cyclohexyl, Cyclooctyl, Cyclodecyl, Adamantyl oder Cyclododecyl vorliegen.

Als $C_7$-$C_{13}$-Aralkylgruppen $R_8$ und/oder $R_9$ und/oder $R_{13}$ können beispielsweise Benzyl, 2-Phenyläthyl, Benzhydryl oder Naphthylmethyl vorliegen.

$C_6$-$C_{10}$-Arylgruppen $R_8$ und/oder $R_9$ und/oder $R_{10}$ sind z.B. Phenyl oder Naphthyl.

$C_7$-$C_{18}$-Alkylphenylgruppen als $R_{10}$ und/oder $R_{13}$ sind z.B. Tolyl, Xylyl, 4-Isopropylphenyl, 4-tert.-Butylphenyl, 4-Octylphenyl oder 4-Dodecylphenyl.

Bilden $R_8$ und $R_9$ zusammen mit dem Stickstoffatom, an das sie gebunden sind, einen heterocyclischen Rest, so kann dieser ein Morpholin-, Pyrrolidin-, Piperidin- oder Perhydroazepinrest sein.

Als $C_1$-$C_{12}$-Alkylenfunktionen im Rest der Formel II können Methylen, Äthylen, 1,2- oder 1,3-Propylen, 1,4-Butylen, 1,6-Hexylen, 1,8-Octylen, 1,10-Decylen oder 1,12-Dodecylen vorliegen.

Zu Kationen M zählen Ammonium, Natrium, Kalium, Calcium, Magnesium, Chrom, Eisen, Nickel, Kobalt und insbesondere Zink.

Solche erfindungsgemässe Reaktionsprodukte werden bevorzugt, die sich von Verbindungen der Formel IA ableiten, worin $R_7$ für Wasserstoff oder Methyl sowie $R_8$ und $R_9$ je für eine $C_1$-$C_{20}$-Alkylgruppe, vorzugsweise eine $C_4$-$C_{13}$-Alkylgruppe und besonders bevorzugt für eine $C_8$-Alkylgruppe stehen. Weitere bevorzugte erfindungsgemässe Reaktionsprodukte sind solche, die sich von Verbindungen der Formel IB ableiten, worin $R_{10}$ und $R_{11}$ beide Wasserstoff oder $R_{10}$ Wasserstoff und $R_{11}$ $-CH_2R_8R_9$, wobei $R_8$ und $R_9$ je für $C_1$-$C_{20}$-Alkyl, vorzugsweise $C_4$-$C_{13}$-Alkyl, insbesondere eine $C_8$-Alkylgruppe, stehen, bedeuten.

Bevorzugte spezielle Reaktionspartner A) zur Herstellung der erfindungsgemässen Reaktionsprodukte sind unter anderem: 1-(Dimethylaminomethyl)-benztriazol, 1-(Diäthylaminomethyl)-benztriazol, 1-(Diisopropylaminomethyl)-benztriazol, 1-(Di-n-hexylaminomethyl)-benztriazol, 1-(Di-n-octylaminomethyl)-benztriazol, 1-(Di-n-decylaminomethyl)-benztriazol, 1-(Di-n-dodecylaminomethyl)-benztriazol, 1-(Di-n-octadecylaminomethyl)-benztriazol, 1-(Di-n-eikosylaminomethyl)-benztriazol, 1-[Di-prop-2-enyl)-aminomethyl]-benztriazol, 1-[Di-(but-2-enyl)-aminomethyl]-benztriazol, 1-[Di-(eikos-2-enyl)-aminomethyl]-benztriazol, 1-(Di-cyclohexylaminomethyl)-benztriazol, 1-(Di-benzylaminomethyl)-benztriazol, 1-(Di-phenylaminomethyl)-benztriazol, 1-(4-Morpholinomethyl)-benztriazol, 1-(4-Pyrrolidinomethyl)-benztriazol, 1-(4-Piperidinomethyl)-benztriazol, 1-(4-Perhydroazepinomethyl)-benztriazol, 1-(Dibutoxypropyl-aminomethyl)-benztriazol, 1-(Dibutylthiopropyl-aminomethyl)-benztriazol, 1-(Dibutylaminopropyl-aminomethyl)-benztriazol, 1,2,4-Triazol, 1-(oder 4)-(Dimethylaminomethyl)-1,2,4-triazol, 1-(oder 4)-(Diäthylaminomethyl)-1,2,4-triazol, 1-(oder 4)-(Diisopropylaminomethyl)-1,2,4-triazol, 1-(oder 4)-(Di-n-butylaminomethyl)-1,2,4-triazol, 1-(oder 4)-(Di-n-hexylaminomethyl)-1,2,4-triazol, 1-(oder 4)-(Di-n-octylaminomethyl)-1,2,4-triazol, 1-(oder 4)-(Di-n-decylaminomethyl)-1,2,4-triazol, 1-(oder 4)-(Di-n-dodecylaminomethyl)-1,2,4-triazol, 1-(oder 4)-(Di-n-octadecylaminomethyl)-1,2,4-triazol, 1-(oder 4)-(Di-n-eikosylaminomethyl)-1,2,4-triazol, 1-(oder 4)-[Di-(prop-2-enyl)-aminomethyl]-1,2,4-triazol, 1-(oder 4)-[Di-(but-2-enyl)-aminomethyl]-1,2,4-triazol, 1-(oder 4)-[Di-(eikos-2-enyl)-aminomethyl]-1,2,4-triazol, 1-(oder 4)-(Di-cyclohexylaminomethyl)-1,2,4-triazol, 1-(oder 4)-(Di-benzylaminomethyl)-1,2,4-triazol, 1-(oder 4)-(Di-phenylaminomethyl)-1,2,4-triazol, 1-(oder 4)-(4-Morpholinomethyl)-1,2,4-triazol, 1-(oder 4)-(4-Pyrrolidinomethyl)-1,2,4-triazol, 1-(oder 4)-(4-Piperidinomethyl)-1,2,4-triazol, 1-(oder 4)-(4-Perhydroazepinomethyl)-1,2,4-triazol, 1-(oder 4)-(Dibutoxypropyl-aminomethyl)-1,2,4-triazol, 1-(oder 4)-(Dibutylthiopropyl-aminomethyl)-1,2,4-triazol und 1-(oder 4)-(Di-butylaminopropyl-aminomethyl)-1,2,4-triazol.

Zu bevorzugten speziellen Reaktionspartnern B) zur Herstellung der erfindungsgemässen Reaktionsprodukte gehören: Zink-bis-[(O,O'-dimethyl)-dithiophosphat], Zink-bis-[(O,O'-diäthyl)-dithiophosphat], Zink-bis-[(O,O'-di-n-propyl)-dithiophosphat], Zink-bis-[(O,O'-di-isobutyl)-dithiophosphat], Zink-bis-[(O,O'-di-dimethylbutyl)-dithiophosphat], Zink-bis-[(O,O'-di-n-pentyl)-dithiophosphat], Zink-bis-[(O,O'-di-n-hexyl)-dithiophosphat], Zink-bis-[(O,O'-di-n-eikosyl)-dithiophosphat], Zink-bis-[(O,O'-di-1,3-dimethylbutylphenyl)-dithiophosphat] und Zink-bis-[(O,O'-di-dodecylphenyl)-dithiophosphat] sowie besonders bevorzugt Zink-bis-[(O,O'-di-2-äthylhexyl)-dithiophosphat], Zink-bis-[(O,O'-di-p-nonylphenyl)-dithiophosphat] und Gemische aus Zink-bis-(isobutyl)- und Zink-bis-(hexyl)-dithiophosphat.

Die Reaktion zwischen den Komponenten A) und B) kann bei Temperaturen im Bereich von vorzugsweise 50 bis 110°C erfolgen. Zweckmässig lässt man die Reaktion ablaufen, bis sich das Reaktionsgemisch klärt. Dafür genügt normalerweise eine Reaktionszeit im Bereich von 20 Minuten bis 3 Stunden. Man kann die Reaktionspartner A) und B) in ungefähr

stöchiometrischem Verhältnis oder einem Überschuss des einen oder anderen einsetzen.

Die Verbindungen der Formel IA sind bekannt und durch Umsetzung eines gegebenenfalls alkylsubstituierten Benztriazols der Formel

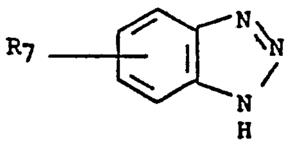

IV

worin $R_7$ seine obige Bedeutung hat, mit Formaldehyd und einem Amin der Formel

$$HNR_8R_9 \quad V$$

worin $R_8$ und $R_9$ die obigen Bedeutungen haben, herstellbar.

Die Verbindungen der Formel IB sind zum Teil neue Verbindungen, die Gegenstand der gesonderten britischen Patentanmeldung 2 156 813 sind, während andere bekannt sind.

Sämtliche Verbindungen der Formel IB mit Ausnahme der Stammverbindung 1,2,4-Triazol selbst sind durch Umsetzung eines gegebenenfalls substituierten 1,2,4-Triazols der Formel

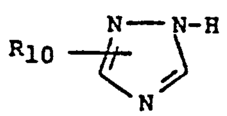

VI

worin $R_{10}$ seine obige Bedeutung hat, aber von Wasserstoff verschieden ist, mit einem N-$C_1$-$C_{12}$-Alkylierungsmittel, das zur Einführung einer $C_1$-$C_{12}$-Alkylgruppe $R_{11}$ befähigt ist, herstellbar.

Die Reaktionspartner B) sind bekannt und in vielen Fällen im Handel erhältlich.

Die neuen Reaktionsprodukte besitzen verbesserte Löslichkeit in funktionellen Flüssigkeiten und wertvolle Eigenschaften als Metalldesaktivatoren und als Antioxidantien in funktionellen Flüssigkeiten.

Gegenstand vorliegender Erfindung ist demnach auch eine Zusammensetzung, bestehend aus einer funktionellen Flüssigkeit und als Metalldesaktivator, insbesondere für Kupfer, einem metalldesaktivierenden Anteil eines erfindungsgemässen Reaktionsprodukts, vorzugsweise 0,001 bis 5 Gew.-% bezogen auf die Gesamtzusammensetzung. Beispiele für als Substrate für die erfindungsgemässen Zusammensetzungen verwendbare funktionellen Flüssigkeiten sind Schmierstoffe auf Grundlage von Mineralöl, Poly-alpha-olefin oder synthetischem Carbonsäureester, hydraulische Flüssigkeiten auf Mineralöl- oder Phosphatestergrundlage, Metallbearbeitungsflüssigkeiten mit MIneralölsystemen als ihrer Grundlage sowie Transformatoren- und Schalteröle.

Beispiele für synthetische Schmierstoffe sind unter anderem solche auf Grundlage eines Diesters einer zweibasischen Säure und eines einwertigen Alkohols, beispielsweise Dioctylsebacinat oder Dinonyladipat, eines Triesters des Trimethylolpropans und einer einbasischen Säure oder Gemischen solcher Säuren, beispielsweise Trimethylolpropantripelargonat, Trimethylolpropan-tricaprylat oder deren Gemische, eines Tetraesters des Pentaerythrits und einer einbasischen Säure oder Gemischen solcher Säuren, beispielsweise Pentaerythrit-tetracaprylat, oder sich von einbasischen Säuren, zweibasischen Säuren und mehrwertigen Alkoholen ableitender komplexer Ester, beispielsweise eines komplexen Esters aus Trimethylolpropan, Caprylsäure und Sebacinsäure, sowie deren Gemischen.

Weitere synthetische Schmierstoffe sind dem Fachmann bekannt und z.B. in «Schmiermittel-Taschenbuch» (Huethig Verlag, Heidelberg 1974) beschrieben. Ausser den bevorzugten Mineralölen sind z.B. Phosphate, Glykole, Polyglykole, Polyalkylenglykole und Poly-alpha-olefine besonders geeignet.

Erfindungsgemässe Reaktionsprodukte, die sich von Reaktionspartnern IA oder IB ableiten, worin $R^8$ und/oder $R^9$ eine oleophile Gruppe bedeuten, werden zur Verwendung in funktionellen Flüssigkeiten auf Ölgrundlage bevorzugt.

Zur Verbesserung der verschiedenen anwendungstechnischen Eigenschaften können die erfindungsgemässen Zusammensetzungen ferner weitere Zusätze wie ein oder mehrere Antioxidantien, andere Metalldesaktivatoren, Rostschutzmittel, Viskositätsindexverbesserer, Stockpunkterniedriger, Dispergiermittel/Tenside oder Verschleissschutzmittel für Systeme auf Ölgrundlage sowie ein oder mehrere Antioxydantien, Korrosions- und Rostschutzmittel, weitere Metalldesaktivatoren, Hochdruck- oder Verschleissschutz-Zusätze, Komplexiermittel, Fällungsinhibitoren, Biozide, Puffermittel und Schaumverhütungsmittel für Systeme auf wässriger Grundlage enthalten.

Weitere Zusätze für Systeme auf Ölgrundlage sind beispielsweise:

*Beispiele für phenolische Antioxydantien*

1. *Alkylierte Monophenole*

2,6-Di-tert.-butylphenol, 2-tert.-Butyl-4,6-dimethylphenol, 2,6-Di-tert.-butyl-4-äthylphenol, 2,6-Di-tert.-butyl-4-n-butylphenol, 2,6-Di-tert.-butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol und 2,6-Di-tert.-butyl-4-methoxymethylphenol.

2. *Alkylierte Hydrochinone*

2,6-Di-tert.-butyl-4-methoxyphenol, 2,5-Di-tert.-butyl-hydrochinon, 2,5-Di-tert.-amyl-hydrochinon und 2,6-Diphenyl-4-octadecyloxyphenol.

3. *Hydroxylierte Thiodiphenyläther*

2,2'-Thio-bis-(6-tert.-butyl-4-methylphenol), 2,2'-Thio-bis-(4-octylphenol), 4,4'-Thio-bis-(6-tert.-butyl-2-methylphenol) und 4,4'-Thio-bis-(6-tert.-butyl-2-methylphenol).

4. *Alkyliden-Bisphenole*

2,2'-Methylen-bis-(6-tert.-butyl-4-methylphenol), 2,2'-Methylen-bis-(6-tert.-butyl-4-äthylphenol), 2,2'-Methylen-bis-[4-methyl-6-(α-methlcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.-butylphenol), 2,2'-Äthyliden-bis-(4,6-di-tert.-butylphenol), 2,2'-Äthy-

liden-bis-(6-tert.-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(6- tert.-butyl-2-methylphenol), 1,1-Bis-(5-tert.-butyl-4-hydroxy-2-(methylphenyl)-butan, 2,6-Di-(3-tert.-butyl-5-methyl-2-hydroxybenzyl)-4-methylphenol, 1,1,3-Tris-(5-tert.-butyl-4-hydroxy-2-methylphenyl)-3-n-dodecylmercaptobutan, Äthylenglykol-bis-[3,3-bis-(3'-tert.-butyl-4'-hydroxyphenyl)-butyrat], Di-(3-tert.-butyl-4-hydroxy-5-methylphenyl)-dicyclopentadien und Di-[2-(3'-tert.-butyl-2'-hydroxy-5'-methyl-benzyl)-6-tert.-butyl-4-methyl-phenyl]-terephthalat.

5. *Benzylverbindungen*
1,3,5-Tri-(3,5-di-tert.-butyl-4-hydroxybenzyl)-2,4,6-trimethylbenzol, Di-(3,5-di-tert.-butyl-4-hydroxybenzyl)-sulfid, Bis-(4-tert.-butyl-3-hydroxy-2,6-dimethylbenzyl)-dithiolterephthalat, 1,3,5-Tris-(3,5-di-tert.-butyl-4-hydroxybenzyl)-isocyanurat, 1,3,5-Tris-(4-tert.-butyl-3-hydroxy-2,6-dimethylbenzyl)-isocyanurat, 3,5-Di-tert.-butyl-4-hydroxybenzyl-phosphonsäure-dioctadecylester und das Calciumsalz des 3,5-Di-tert.-butyl-4-hydroxybenzylphosphonsäure-monoäthylesters.

6. *Acylaminophenole*
Laurinsäure-4-hydroxyanilid, Stearinsäure-4-hydroxyanilid, 2,4-Bis-octylmercapto-6-(3,5-di-tert.-butyl-4-hydroxyanilino)-s-triazin und N-(3,5-Di-tert.-butyl-4-hydroxyphenyl)-carbaminsäureoctylester.

7. *Ester der β-(3,5-di-tert.-butyl-4-hydroxyphenyl)-propionsäure*
mit ein- oder mehrwertigen Alkoholen, z.B. mit Methanol, Octadecanol, 1,6-Hexandiol, Neopentylglykol, Thiodiäthylenglykol, Diäthylenglykol, Triäthylenglykol, Pentaerythrit, Tris-hydroxyäthyl-isocyanurat und Di-hydroxyäthyl-oxalsäurediamid.

8. *Ester der β-(5-tert.-butyl-4-hydroxy-3-methylphenyl)-propionsäure*
mit ein- oder mehrwertigen Alkoholen, z.B. mit Methanol, Octadecanol, 1,6-Hexandiol, Neopentylglykol, Thiodiäthylenglykol, Diäthylenglykol, Triäthylenglykol Pentaerythrit, Tris-hydroxyäthyl-isocyanurat und Di-hydroxyäthyl-oxalsäurediamid.

9. *Amide der β-(3,5-di-tert.-butyl-4-hydroxyphenyl)-propionsäure,*
z.B. N,N'-Di-(3,5-di-tert.-butyl-4-hydroxyphenylpropionyl)-hexamethylendiamin, N,N'-Di-(3,5-di-tert.-butyl-4-hydroxyphenylpropionyl)-trimethylendiamin und N,N'-Di-(3,5-di-tert.-butyl-4-hydroxyphenylpropionyl)-hydrazin.

*Beispiele für Aminantioxidantien*

N,N'-Di-isopropyl-p-phenylendiamin, N,N'-Di-sek.-butyl-p-phenylendiamin, N,N'-Bis-(1,4-dimethylpentyl)-p-phenylendiamin, N,N'-Bis-(1-äthyl-3-methylpentyl)-p-phenylendiamin, N,N'-Bis-(1-methylheptyl)-p-phenylendiamin, N,N'-Dicyclohexyl-p-phenylendiamin, N,N'-Diphenyl-p-phenylendiamin, N,N'-Di(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sek.-butyl-p-phenylendiamin, Diphenylamin, 4-Isopropoxy-diphenylamin, N-Phenyl-1-naphthylamin, N-Phenyl-2-naphthylamin, octyliertes Diphenylamin, octyliertes N-Phenyl-α(oder β)naphthylamin, 4-n-Butylaminophenol, 4-Butyrylamino-phenol, 4-Nonanoylaminophenol, 4-Isodecanoylamino-phenol, 4-Octadecanoylamino-phenol, Di-(4-methoxyphenyl)-amin, 2,6-Di-tert.-butyl-4-dimethylaminomethyl-phenol, 2.4'-Diamino-diphenylmethan, 4,4'-Diamino-diphenylmethan, N,N,N',N'-Tetramethyl-4,4'-diamino-diphenylmethan, 1,2-Di-(phenylamino)-äthan, 1,2-Di-[(2-methylphenyl)-amino]-äthan, 1,3-Di-(phenylamino)-propan, (o-Tolyl)-biguanid und Di-[4-(1',3'-dimethylbutyl)-phenyl]-amin.

*Beispiele für Metallpassivatoren sind:*
für Kupfer z.B. Benztriazol, Tolutriazol und deren Derivate, Tetrahydrobenztriazol, 2-Mercaptobenzthiazol, 2,5-Dimercaptothiadiazol, Salicyliden-propylendiamin und Salze des Salicylaminoguanidins.

*Beispiele für Rostschutzmittel sind:*
a) Organische Säuren, deren Ester, Metallsalze und Anhydride, z.B. N-Oleoyl-sarkosin, Sorbitanmonooleat, Bleinaphthenat, Dodecenylbernsteinsäure (und deren Halbester und -amide) und 4-Nonylphenoxyessigsäure.

b) Stickstoffhaltige Verbindungen, z.B.

I. Primäre, sekundäre oder tertiäre aliphatische oder cycloaliphatische Amine und Aminsalze organischer und anorganischer Säuren, z.B. öllösliche Alkylammoniumcarboxylate.

II. Heterocyclische Verbindungen, z.B. substituierte Imidazoline und Oxazoline.

c) Phosphorhaltige Verbindungen, z.B. Aminsalze von Phosphonsäureteilestern und Zinkdialkyldithiophosphate.

d) Schwefelhaltige Verbindungen, z.B. Bariumdinonylnaphthalin-n-sulfonate und Calcium-petroleumsulfonate.

*Beispiele für Viskositätsindexverbesserer sind z.B.*
Polymethacrylate, Vinylpyrrolidon/Methacrylatcopolymere, Polybutene, Olefin-copolymere und Styrol/Acrylatcopolymere.

*Beispiele für Stockpunkterniedriger sind z.B.*
Polymethacrylate oder alkylierte Naphthalinderivate.

*Beispiele für Dispergiermittel/Tenside sind z.B.*
Polybutenylbernsteinsäureamide, Polybutenylphosphonsäurederivate sowie basische Magnesium-, Calcium- und Bariumsulfonate und -phenolate.

*Beispiele für Verschleissschutzmittel sind z.B.*
schwefel- und/oder phosphor- und/oder halogenhaltige Verbindungen, beispielsweise geschwefelte

pflanzliche Öle, Zinkdialkyldithiophosphate, Tritolylphosphat, chlorierte Paraffine sowie Alkyl- und Aryldisulfide.

Die neuen erfindungsgemässen Reaktionsprodukte vereinigen in sich ausgezeichnete Metalldesaktivationseigenschaften mit guter Löslichkeit in funktionellen Flüssigkeiten auf Ölgrundlage.

Die nachfolgenden Beispiele dienen der weiteren Erläuterung dieser Erfindung. Teile und Prozentangaben sind dabei stets Gewichtsteile und Gewichtsprozente.

*Beispiel 1*

Man erhitzt ein Gemisch aus 69 g 1,2,4-Triazol und 771 g Zink-bis-[(O,O'-di-2-äthylhexyyl)-dithiophosphat] unter Rühren allmählich auf 95°C. Nach weiteren zwei Stunden Rühren bei dieser Temperatur wird das erhaltene Reaktionsprodukt klar, und die Reaktion wird in diesem Stadium abgebrochen. Man rührt noch weiter, während sich das Produkt auf Raumtemperatur abkühlt. Das Endprodukt ist ein klares gelbes viskoses Öl.

*Beispiel 2*

Man erhitzt ein Gemisch aus 322 g 1-(Di-2-äthylhexylaminomethyl)-1,2,4-triazol und 771 g Zink-bis-[(O,O'-di-2-äthylhexyl)-dithiophosphat] unter Rühren allmählich auf 95°C. Nach weiteren 30 Minuten Rühren bei dieser Temperatur wird das erhaltene Reaktionsprodukt klar, und die Reaktion wird in diesem Stadium abgebrochen. Man rührt weiter, während sich das Produkt auf Raumtemperatur abkühlt. Das Endprodukt ist ein klares gelbes Öl.

*Beispiele 3 und 4*

Es wird eine 0,05%ige Lösung des Produkts aus Beispiel 1 bzw. 2 in einem 50 ppm zugesetzten, gelösten Schwefel enthaltenden Mineralöl von Turbinenqualität hergestellt.

Ein Kupferstreifen (60 × 10 × 1 mm) wird mit auf Watte aufgenommenem und mit Petroläther benetztem Siliciumcarbidsand Nr. 100 poliert. Der polierte Streifen wird dann sofort völlig in die vorbereitete Lösung eingetaucht, die man 2 Stunden lang bei 100°C hält. Danach wird der Streifen herausgenommen, mit Petroläther gewaschen und getrocknet, und seine Farbe wird mit denen auf der Standardkupferstreifenkorrosionskarte nach ASTM D130 verglichen. Bei dieser Bewertung bedeutet 1 kein bis schwaches Anlaufen, 2 mässiges Anlaufen, 3 dunkles Anlaufen und 4 Korrosion; die Bezeichnungen A, B und D beziehen sich auf Nuancen zwischen den zahlenmässigen Bewertungen.

Die Ergebnisse sind in der nachfolgenden Tabelle I zusammengestellt:

Tabelle I

| Beispiel | Desaktivator | Aussehen des Metalls | % Löslichkeit |
|---|---|---|---|
| — | ohne | Purpur - Bewertung 3B | — |
| — | 1,2,4-Triazol | — | <0,05 |
| 3 | Produkt aus Beispiel 1 | unverändert - Bewertung 1A | >10 |
| 4 | Produkt aus Beispiel 2 | unverändert - Bewertung IA | >1 |

1,2,4-Triazol besitzt nicht die zur Durchführung dieser Prüfung erforderliche Löslichkeit (0,05%) in Mineralöl.

*Beispiel 5 und 6*

*Turbinenölstabilitätsprüfung (TOST) - ASTM D943 modifiziert*

300 ml eines zu prüfenden Öls, bestehend aus 99,70 Gew.-% eines Öls auf Petroleumgrundlage, 0,25 Gew.-% des Produkts aus Beispiel 1 oder 2 und 0,05 Gew.-% teilveresterter Dodecenylbernsteinsäure, werden in Gegenwart von 60 ml Wasser, Sauerstoff bei einer Durchflussgeschwindigkeit von 3 ± 0,5 Liter/Stunde und einem Eisen-Kupferkatalysators auf 95°C erhitzt. Nach 500 Stunden wird das oxydierte Öl zur Bestimmung der während der Prüfung gebildeten Menge Schlamm durch ein 10 Mikron-Filterpapier filtriert.

Die Ergebnisse sind in Tabelle II zusammengefasst:

Tabelle II

| Beispiel | Antioxydans | Gebildeter Schlamm (mg) |
|---|---|---|
| — | — | >5000 |
| 5 | Produkt aus Beispiel 1 | 88 |
| 6 | Produkt aus Beispiel 2 | 108 |

*Beispiel 7 bis 14*

Nach der in Beispiel 1 beschriebenen Verfahrensweise werden weitere erfindungsgemässe Reaktionsprodukte durch Umsetzung spezieller Verbindungen der Formel IB

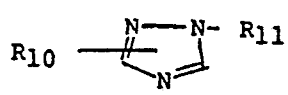
IB

mit verschiedenen Verbindungen der Formel III

$$[(R_{13}O)_2P(=S)-S]_yM \qquad III$$

hergestellt.

Die dabei erhaltenen Reaktionsprodukte werden dann nach der Kupferstreifenprüfung (unter Anwendung der in Beispiel 3 und 4 beschriebenen Arbeitsweise) und nach der Turbinenölstabilitätsprüfung (TOST) (siehe Beispiel 5 und 6) bewertet.

Die Ergebnisse sind in Tabelle III zusammengefasst:

Tabelle III

| Beispiel | $R_{10}$ | $R_{11}$ | $R_{13}$ | y | M | Aussehen des Metalls | Schlamm (mg) |
|---|---|---|---|---|---|---|---|
| — | | | ohne Zusatz | | | 3B | > 5000 |
| 7 | $CH_3$ | H | $C_4H_9CH(C_2H_5)CH_2$- | 2 | Zn | 1A | 84 |
| 8 | $C_2H_5$ | H | $C_4H_9CH(C_2H_5)CH_2$- | 2 | Zn | 1A | 213 |
| 9 | n-$C_4H_9$ | H | $C_4H_9CH(C_2H_5)CH_2$- | 2 | Zn | 1A | 298 |
| 10 | i-$C_4H_9$ | H | $C_4H_9CH(C_2H_5)CH_2$- | 2 | Zn | 1A | 39 |
| 11 | n-$C_6H_{13}$ | H | $C_4H_9CH(C_2H_5)CH_2$- | 2 | Zn | 1B | 270 |
| 12 | Cyclohexyl | H | $C_4H_9CH(C_2H_5)CH_2$- | 2 | Zn | 1A | 126 |
| 13 | Benzyl | H | $C_4H_9CH(C_2H_5)CH_2$- | 2 | Zn | 1A | 98 |
| 14 | Phenyl | H | $C_4H_9CH(C_2H_5)CH_2$- | 2 | Zn | 1B | 88 |

*Beispiel 15*

Nach der in Beispiel 1 beschriebenen Arbeitsweise wird 1-[Di-(2-äthylhexyl)-aminomethyl]-methylbenztriazol mit Zink-bis-[(O,O'-di-2-äthylhexyl)-dithiophosphat] umgesetzt.

Das dabei erhaltene Reaktionsprodukt ergibt eine Kupferstreifenbewertung (siehe Beispiel 3 und 4) von 1A und einen Schlammwert bei der Turbinenölstabilitätsprüfung (TOST) – siehe Beispiel 5 und 6 – von 99 mg.

**Patentansprüche**

1. Reaktionsprodukte, hergestellt durch Umsetzung bei einer Temperatur im Bereich von 30 bis 150°C

A) eines Triazols der Formel IA oder IB

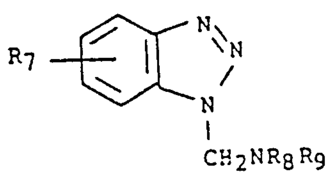

IA

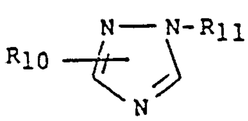

IB

worin $R_7$ für Wasserstoff oder einen $C_1$-$C_{20}$-Alkylrest steht, $R_8$ und $R_9$ gleich oder verschieden sind und je $C_1$-$C_{20}$-Alkyl, $C_3$-$C_{20}$-Alkenyl, $C_5$-$C_{12}$-Cycloalkyl, $C_7$-$C_{13}$-Aralkyl oder $C_6$-$C_{10}$-Aryl bedeuten oder zusammen mit dem Stickstoffatom, an das sie gebunden sind, einen 5-, 6- oder 7gliedrigen heterocyclischen Rest bilden oder je einen Rest der Formel

$R_{12}X[(Alkylen)O]_n(Alkylen)$- II

darstellen, wobei X für O, S oder $N(R_{12})$, $R_{12}$ für Wasserstoff oder $C_1$-$C_{20}$-Alkyl, «Alkylen» für einen $C_1$-$C_{12}$-Alkylenrest und n für 0 oder eine ganze Zahl von 1 bis 6 stehen, sowie $R_{10}$ Wasserstoff, $C_1$-$C_{20}$-Alkyl, $C_6$-$C_{10}$-Aryl oder $C_7$-$C_{18}$-Alkylphenyl und $R_{11}$ Wasserstoff, $C_1$-$C_{20}$-Alkyl oder einen Rest -$CH_2NR_8R_9$, worin $R_8$ und $R_9$ die oben angegebenen Bedeutungen haben, darstellen, mit

B) einem Organodithiophosphat der Formel

S
‖
$[(R_{13}O)_2P$-$S]_y$-M III

worin $R_{13}$ eine $C_1$-$C_{20}$-Alkyl-, $C_7$-$C_{18}$-Alkylphenyl- oder $C_7$-$C_{13}$-Aralkylgruppe, M ein Metallion aus Gruppe IA, IB, IIA, IIB, VB, VIB, VIIB oder VIII des Periodensystems der Elemente und y die Wertigkeit von M bedeuten.

2. Reaktionsprodukte nach Anspruch 1, dadurch gekennzeichnet, dass der Reaktionspartner A) eine Verbindung der Formel IA ist, worin $R_7$ für Wasserstoff oder Methyl sowie $R_8$ und $R_9$ je für eine $C_1$-$C_{20}$-Alkylgruppe stehen.

3. Reaktionsprodukte nach Anspruch 2, dadurch gekennzeichnet, dass $R_8$ und $R_9$ je für eine $C_4$-$C_{13}$-Alkylgruppe stehen.

4. Reaktionsprodukte nach Anspruch 3, dadurch gekennzeichnet, dass $R_8$ und $R_9$ je für eine $C_8$-Alkylgruppe stehen.

5. Reaktionsprodukte nach Anspruch 1, dadurch gekennzeichnet, dass der Reaktionspartner A) eine Verbindung der Formel IB ist, worin $R_{10}$ und $R_{11}$ beide Wasserstoff oder $R_{10}$ Wasserstoff und $R_{11}$ -$CH_2R_8R_9$, wobei $R_8$ und $R_9$ je für $C_1$-$C_{20}$-Alkyl stehen, bedeuten.

6. Reaktionsprodukte nach Anspruch 5, dadurch gekennzeichnet, dass $R_8$ und $R_9$ je für eine $C_4$-$C_{13}$-Alkylgruppe stehen.

7. Reaktionsprodukte nach Anspruch 6, dadurch gekennzeichnet, dass $R_8$ und $R_9$ je für eine $C_8$-Alkylgruppe stehen.

8. Reaktionsprodukte nach Anspruch 1, dadurch gekennzeichnet, dass der Reaktionspartner B) Zink-bis-[(O,O'-di-2-äthylhexyl)-dithiophosphat] ist.

9. Reaktionsprodukte nach Anspruch 1, dadurch gekennzeichnet, dass die Reaktionstemperatur im Bereich von 50 bis 110°C liegt.

10. Reaktionsprodukte nach Anspruch 1, dadurch gekennzeichnet, dass man die Reaktion ablaufen lässt, bis sich das Reaktionsgemisch klärt.

11. Reaktionsprodukte nach Anspruch 1, dadurch gekennzeichnet, dass der Reaktionspartner A) 1,2,4-Triazol oder 1-(Di-2-äthylhexylaminomethyl)-1,2,4-triazol und Reaktionspartner B) Zink-bis-[(O,O'-di-2-äthylhexyl)-dithiophosphat] ist.

12. Zusammensetzung, bestehend aus einer funktionellen Flüssigkeit und als Metalldesaktivator einem metalldesaktivieren den Anteil eines Reaktionsprodukts nach Anspruch 1.

13. Zusammensetzung nach Anspruch 12, dadurch gekennzeichnet, dass der Anteil an Reaktionsprodukt nach Anspruch 1 0,001 bis 5 Gew.-% beträgt, bezogen auf das Gesamtgewicht der Zusammensetzung.

14. Zusammensetzung nach Anspruch 12, dadurch gekennzeichnet, dass die funktionelle Flüssigkeit einen Schmierstoff auf Grundlage von Mineralöl, Poly-alpha-olefin oder synthetischem Carbonsäureester, eine hydraulische Flüssigkeit auf Grundlage von Mineralölen oder Phosphatestern, Metallbearbeitungsflüssigkeiten mit Mineralölsystemen als ihre Grundlage, Transformatoren- oder Schalteröle darstellt.

15. Zusammensetzung nach Anspruch 14, dadurch gekennzeichnet, dass die funktionelle Flüssigkeit einen Schmierstoff auf Mineralölgrundlage darstellt.

16. Zusammensetzung nach Anspruch 14, dadurch gekennzeichnet, dass die funktionelle Flüssigkeit auf Öl basiert und ferner als weitere Zusätze ein oder mehrere Antioxidantien, Rostschutzmittel, Viskositätsindexverbesserer, Stockpunkterniedriger, Dispergiermittel/Tenside oder Verschleissschutzmittel enthält.

**Claims**

1. Reaction product prepared by reacting, at a temperature in the range from 30 to 150°C,

A) a triazole of formula IA or IB

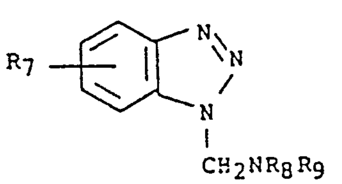

IA

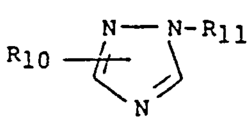

IB

in which $R_7$ is hydrogen or a $C_1$-$C_{20}$alkyl radical, $R_8$ and $R_9$ are the same or different and each is $C_1$-$C_{20}$alkyl, $C_3$-$C_{20}$alkenyl, $C_5$-$C_{12}$cycloalkyl, $C_7$-$C_{13}$-aralkyl or $C_6$-$C_{10}$aryl or together with the nitrogen atom to which they are attached, form a 5-, 6- or 7-membered heterocyclic radical or is a radical of formula

$$R_{12}X[(alkylene)O]_n(alkylene)- \qquad II$$

where X is O, S or $N(R_{12})$, $R_{12}$ is hydrogen or $C_1$-$C_{20}$alkyl, «alkylene» is a $C_1$-$C_{12}$alkylene radical and n is 0 or an integer from 1 to 6, and $R_{10}$ is hydrogen, $C_1$-$C_{20}$alkyl or $C_6$-$C_{10}$aryl or $C_7$-$C_{18}$alkylphenyl and $R_{11}$ is hydrogen, $C_1$-$C_{20}$alkyl or a radical $-CH_2NR_8R_9$, in which $R_8$ and $R_9$ have their previous significance, with

B) an organodithiophosphate of formula

$$[(R_{13}O)_2\overset{\overset{S}{\|}}{P}-S]_y-M \qquad III$$

in which $R_{13}$ is a $C_1$-$C_{20}$alkyl-, $C_7$-$C_{18}$alkylphenyl or $C_7$-$C_{13}$aralkyl group, M is a metal ion of group IA, IB, IIA, IIB, VB, VIB, VIIB or VIII of the Periodic System of Elements, and y is the valency of M.

2. Reaction product according to claim 1, wherein reactant A) is a compound of formula IA in which $R_7$ is hydrogen or methyl and $R_8$ and $R_9$ are each a $C_1$-$C_{20}$alkyl group.

3. Reaction product according to claim 2, wherein $R_8$ and $R_9$ are each a $C_4$-$C_{13}$alkyl group.

4. Reaction product according to claim 3, wherein $R_8$ and $R_9$ are each a $C_8$alkyl group.

5. Reaction product according to claim 1, wherein the reactant A) is a compound of formula IB in which $R_{10}$ and $R_{11}$ are both hydrogen or $R_{10}$ is hydrogen and $R_{11}$ is $-CH_2R_8R_9$ in which $R_8$ and $R_9$ are each $C_1$-$C_{20}$alkyl.

6. Reaction product according to claim 5, wherein $R_8$ and $R_9$ are each a $C_4$-$C_{13}$alkyl group.

7. Reaction product according to claim 6, wherein $R_8$ and $R_9$ are each a $C_8$alkyl group.

8. Reaction product according to claim 1, wherein reactant B) is zinc bis[(O,O'-di-2-ethylhexyl)dithiophosphate].

9. Reaction product according to claim 1, wherein the reaction temperature ranges from 50 to 110°C.

10. Reaction product according to claim 1, wherein the reaction is effected until the reaction mixture becomes clear.

11. Reaction product according to claim 1, wherein reactant A) is 1,2,4-triazole or 1-(di-2-ethylhexylaminomethyl)-1,2,4-triazole and reactant B) is zinc bis[(O,O'-di-2-ethylhexyl)dithio-phosphate].

12. Composition comprising a functional fluid and, as metal deactivator, a metal deactivating proportion of a reaction product according to claim 1.

13. Composition according to claim 12, wherein the proportion of the reaction product according to claim 1 is from 0.001 to 5% by weight, based on the total weight of the composition.

14. Composition according to claim 12, wherein the functional fluid is a lubricant having a mineral oil, poly-alpha olefin or synthetic carboxylic ester base, a hydraulic fluid based on mineral oils or phosphate esters, metal-working fluids having, as their base, mineral oil systems or transformer or switch oils.

15. Composition according to claim 14, wherein the functional fluid is a lubricant based on mineral oil.

16. Composition according to claim 14, wherein the functional fluid is oil-based and also contains, as further additives, one or more of antioxidants, rust inhibitors, viscosity-index improvers, pour-point depressants, dispersants/surfactants or antiwear additives.

## Revendications

1. Produits réactionnels préparés par réaction, à une température située dans l'intervalle allant de 30 à 150°C,

A) d'un triazole répondant à l'une des formules IA et IB

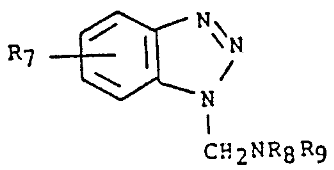

IA

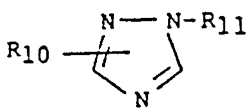

IB

dans lesquelles $R_7$ représente l'hydrogène ou un alkyle en $C_1$-$C_{20}$, $R_8$ et $R_9$ sont identiques ou différents et représentent chacun un alkyle en $C_1$-$C_{20}$, un alcényle en $C_3$-$C_{20}$, un cycloalkyle en $C_5$-$C_{12}$, un aralkyle en $C_7$-$C_{13}$ ou un aryle en $C_6$-$C_{10}$ ou forment ensemble, et avec l'atome d'azote auquel ils sont liés, un radical hétérocyclique à 5, à 6 ou à 7 maillons, ou représentent chacun un radical répondant à la formule II

$R_{12}X[(Alkylène)O]_n(Alkylène)$- II

(dans laquelle X représente O, S ou $N(R_{12})$, $R_{12}$ représente l'hydrogène ou un alkyle en $C_1$-$C_{20}$, «Alkylène» représente un radical alkylène en $C_1$-$C_{12}$ et n désigne un nombre entier (de 0 à 6), $R_{10}$ représente l'hydrogène, un alkyle en $C_1$-$C_{20}$, un aryle en $C_6$-$C_{10}$ ou un alkylphényle en $C_7$-$C_{18}$, et R $R_{11}$ représente l'hydrogène, un alkyle en $C_1$-$C_{20}$ ou un radical $-CH_2NR_8R_9$ dans lequel $R_8$ et $R_9$ ont les siginifications qui viennent de leur être données, avec

B) un organo-dithiophosphate répondant à la formule

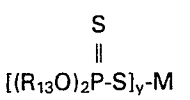

III

dans laquelle $R_{13}$ représente un alkyle en $C_1$-$C_{20}$, un alkylphényle en $C_7$-$C_{18}$ ou un aralkyle en $C_7$-$C_{13}$, M représente un ion d'un métal appartenant à l'un des groupes IA, IB, IIA, IIB, VB, VIB, VIIB et VIII de la classification périodique des éléments, et y est égal à la valence de M.

2. Produits réactionnels selon la revendication 1, caractérisés en ce que le partenaire réactionnel A) est un composé de formule IA dans lequel $R_7$ représente l'hydrogène ou un méthyle, et $R_8$ et $R_9$ représentent chacun un alkyle en $C_1$-$C_{20}$.

3. Produits réactionnels selon la revendication 2, caractérisés en ce que $R_8$ et $R_9$ représentent chacun un alkyle en $C_4$-$C_{13}$.

4. Produits réactionnels selon la revendication 3, caractérisés en ce que $R_8$ et $R_9$ représentent chacun un alkyle en $C_8$.

5. Produits réactionnels selon la revendication 1, caractérisés en ce que le partenaire réactionnel A) est un composé de formule IB dans lequel $R_{10}$ et $R_{11}$ représentent l'un et l'autre l'hydrogène, ou $R_{10}$ représente l'hydrogène et $R_{11}$ un radical $-CH_2R_8R_9$ dans lequel $R_8$ et $R_9$ représentent chacun un alkyle en $C_1$-$C_{20}$.

6. Produits réactionnels selon la revendication 5, caractérisés en ce que $R_8$ et $R_9$ représentent chacun un alkyle en $C_4$-$C_{13}$.

7. Produits réactionnels selon la revendication 6, caractérisés en ce que $R_8$ et $R_9$ représentent chacun un alkyle en $C_8$.

8. Produits réactionnels selon la revendication 1, caractérisés en ce que le partenaire réactionnel B est le bis-[(O,O'-bis-éthyl-2 hexyl)-dithiophosphate] de zinc.

9. Produits réactionnels selon la revendication 1, caractérisés en ce que la température réactionnelle est située dans l'intervalle allant de 50 à 110°C.

10. Produits réactionnels selon la revendication 1, caractérisés en ce qu'on laisse la réaction se dérouler jusqu'à ce que le mélange réactionnel devienne limpide.

11. Produits réactionnels selon la revendication 1, caractérisés en ce que le partenaire réactionnel A) est le triazole-1,2,4 ou le [bis-(éthyl-2 hexyl)-aminométhyl]-1 triazole-1,2,4, et le partenaire réactionnel B) est le bis-[(O,O'-bis-éthyl-2 hexyl)-dithiophosphate] de zinc.

12. Composition contenant un liquide fonctionnel et, comme désactivant de métaux, une quantité efficace, en ce qui concerne la désactivation de métaux, d'un produit réactionnel selon la revendication 1.

13. Composition selon la revendication 12, caractérisée en ce que la quantité du produit réactionnel selon la revendication 1 est comprise entre 0,001 et 5% en poids par rapport au poids total de la composition.

14. Composition selon la revendication 12, caractérisée en ce que le liquide fonctionnel est un lubrifiant à base d'une huile minérale, d'une poly-α-oléfine ou d'un ester d'acide carboxylique synthétique, un liquide hydraulique à base d'huiles minérales ou d'esters phosphoriques, un liquide à base d'huiles minérales pour l'usinage de métaux, ou une huile pour transformateurs ou commutateurs.

15. Composition selon la revendication 14, caractérisée en ce que le liquide fonctionnel est un lubrifiant à base d'huiles minérales.

16. Composition selon la revendication 14, caractérisée en ce que le liquide fonctionnel est à base d'une huile et contient un ou plusieurs additifs supplémentaires pris parmi les anti-oxidants, les inhibiteurs de corrosion, les améliorateurs d'indice de viscosité, les abaisseurs de point de congélation, les dispersants/surfactifs et les agents anti-usures.